# EUROPEAN PATENT SPECIFICATION

(11) **EP 0 637 527 B1**
(45) Date of publication and mention of the grant of the patent: **01.10.1997**
(21) Application number: 94111907.5
(22) Date of filing: 29.07.1994
(51) Int. Cl.: B60R 25/04

(54) **Vehicle antitheft system**
Kraftfahrzeug-Diebstahlsicherungssystem
Système d'antivol pour véhicule

(30) Priority: 06.08.1993 IT TO930586
(43) Date of publication of application: 08.02.1995
(73) Proprietor: MAGNETI MARELLI S.p.A., 20145 Milano (IT)
(72) Inventor: Matteucci, Daniele, I-40100 Bologna (IT); Tegoni, Enrico, I-40137 Bologna (IT)
(74) Representative: Boggio, Luigi

(56) References cited:
- FR-A- 2 592 347
- FR-A- 2 613 993
- US-A- 5 224 567
- PATENT ABSTRACTS OF JAPAN vol. 8, no. 128 (M-302) (1565) 14 June 1984 & JP-A-59 032 544 (NIPPON DENSO K.K.) 22 February 1984

## Description

The present invention relates to a vehicle antitheft system for vehicles including an engine and an electronic engine control system.

Systems of the aforementioned type currently installed on motor vehicles are known to comprise an electronic control system for enabling operation of the engine on receiving a user code; an antitheft device for receiving the user code and transmitting it to the control system; and a user code transmitter carried by the user. Failing reception of the correct user code, the control system prevents the engine from being started. A major drawback of the above system is that, in the event of a fault on the antitheft device, the control system, failing to receive the user code, prevents the engine from being started even by the owner of the vehicle.

The French Patent Application FR-A-2 613 933, proposes a first solution of this drawback, using means which permits to transmit the user code to the control system using a series of events effected by the user on internal parts of the vehicle. For example this events may be an actuation of the accelerator in combination with an action on the air conditioner.

However, in the solution proposed by the French Patent Application FR-A-2 613 933, in particular if even in the event the user code should become known, it permits startup of the engine an unlimited number of times. Moreover the user code normally consists in a long binary sequence, thus the transmission of the user code to the control system using a series of internal events is very complicated.

It is an object of the present invention to provide a vehicle antitheft system enabling the owner of the vehicle to start the engine in the event of a fault on the anti theft device, without the drawbacks of the systems according to the state of the art.

Further aims and advantages of the present invention will be disclosed in the following description.

The object of the present invention is achieved by the subject-matter of claim 1. Further advantageous features are defined in the dependent claims.

A preferred, non-limiting embodiment of the present invention will be described by way of example with reference to the accompanying drawings, in which:
Figure 1 shows a block diagram of an antitheft system in accordance with the teachings of the present invention;
Figure 2 shows an operational flow chart of the Figure 1 system.

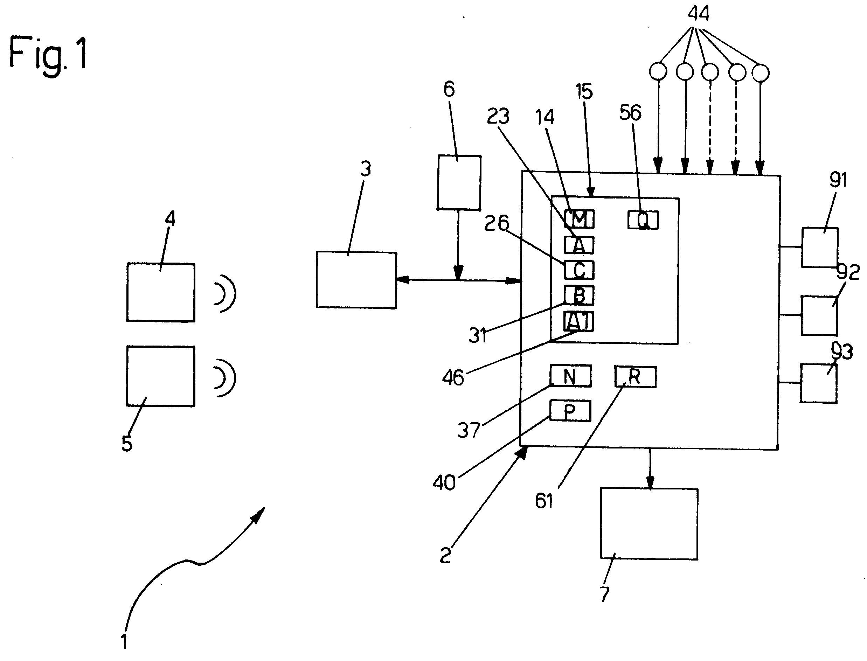

Number 1 in Figure 1 indicates a vehicle antitheft system for motor vehicles.

System 1 comprises:
an electronic control system 2 for enabling operation of the engine on receiving a user code "A", a fitter code "B", or a maker code "C";
an on-vehicle antitheft device 3 presenting a signal receiver connected to control system 2;
a code "A" transmitter 4 for the user;
a code "B" transmitter 5 for the fitter of system 1 to the vehicle;
a device 6 for the maker of control system 2, and connectable to control system 2 for transmitting code "C"; and
a display 7 connected to control system 2 and fitted to the vehicle dashpanel.
Transmitters 4 and 5 may consist of electromagnetic wave generators or electronic keys; and control system 2 is a self-deactivating type.

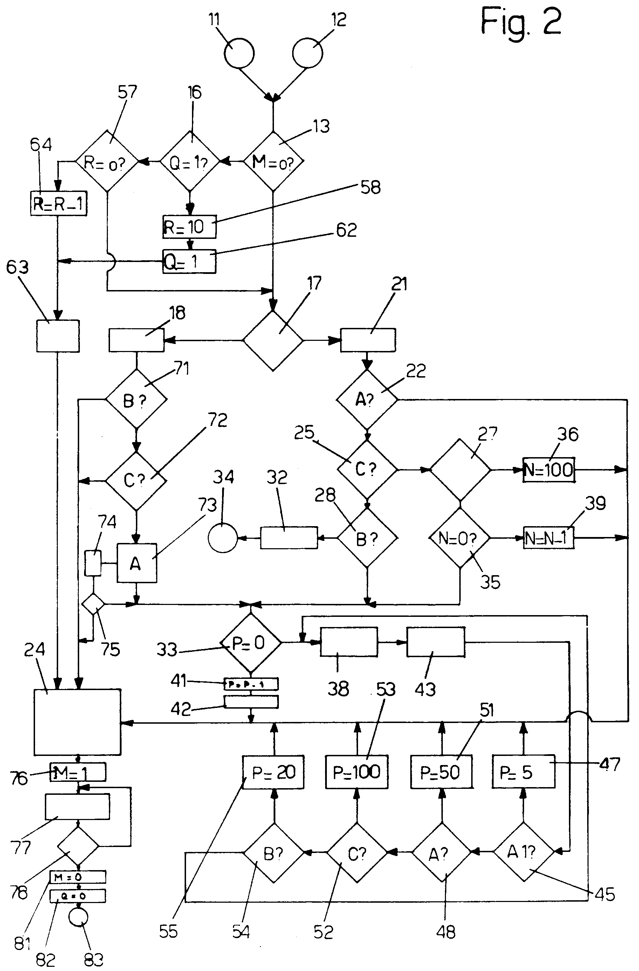

With reference to Figures 1 and 2, the operational flow chart of system 1 comprises two start blocks 11 and 12, the first relative to electrical connection of control system 2, e.g. by means of the ignition key, and the second of which is the output block of a procedure, within control system 2, for initializing system 2 following an internal error. Blocks 11 and 12 go on to block 13 which determines whether a quantity "M" in cell 14 of memory 15 of control system 2 (Figure 1) presents a "0" or "1" value. If "M" equals "1", block 13 goes on to block 16; conversely, block 13 goes on to block 17.

Block 17 determines whether code "A" has ever been "seen", i.e. whether control system 2 is newly installed, or has already performed an engine startup enabling procedure based on recognition of code "A". If control system 2 is newly installed, block 17 goes on to block 18; conversely, block 17 goes on to block 21. In block 21, control system 2 requests two-time transmission of a code by the electric blocks connected to it. The code may be "A" or "B", in which case it is transmitted to control system 2 by device 3, or "C", in which case it is transmitted by device 6. Upon control system 2 receiving two identical codes within a predetermined time, block 21 goes on to block 22 which determines whether the code received is the user code "A" stored in cell 23 of memory 15. In the event of a positive response, block 22 goes on to block 24. Conversely, block 22 goes on to block 25 which determines whether the code received is the maker code "C" stored in cell 26 of memory 15.

In the event of a positive response, block 25 goes on to block 27. Conversely, block 25 goes on to block 28 which determines whether the code received is the fitter code "B" stored in cell 31 of memory 15. In the event of a positive response, block 28 goes on to block 32; conversely, block 28 goes on to block 33. Block 32 provides for activating an engine startup lock procedure within control system 2, which procedure may only be exited, as shown schematically by block 34, by removing the ignition key. Block 32 also provides for a character display on display 7, indicating the engine lock condition defined in block 32 by the above procedure. Block 27 determines whether code "C" has ever been "seen", i.e. whether control system 2 is at the maker's disposal for setup or maintenance purposes. In the event control system 2 has already performed an engine enabling procedure based on recognition of code "C", block 27 goes on to block 35; conversely, block 27 goes on to block 36.

Block 36 commands a reference quantity "N" in counter 37 (fig. 1) of control system 2 to assume a discrete value of, say, "100", and then goes on to block 24; and block 35 determines whether reference quantity "N" presents a "0" value. In the event of a positive response, block 35 goes on to block 33. Conversely, block 35 goes on to block 39 which decreases the value of quantity "N" by one unit, and then goes on to block 24.

Block 33 determines whether a reference quantity "P", the value of which is stored in counter 40 of control system 2, presents a "0" value. In the event of a positive response, block 33 goes on to block 38. Conversely, block 33 goes on to block 41 which decreases the present value of quantity "P" by one unit, and then goes on to block 42 and from there to block 24. Block 42 provides, on display 7, for a character display indicating counter 40, and for a user indication of the value of quantity "P". Block 38 provides for activating an engine startup lock procedure, within control system 2, which procedure may only be exited, as shown schematically by block 43, by the user twice performing a series of events which control system 2 identifies as corresponding to code "A", part "A1" of code "A", code "B" or code "C". Such events may be a combination of a number of operations of the brake pedal, a number of turn-on operations of electrical components such as the headlights, etc., which are detected by control system 2 by means of a number of sensors 44 (Figure 1) and converted internally into an operating code. Block 38 also provides for a character display on display 7, indicating the engine lock condition defined in block 38 by the above procedure. Part "A1" of user code "A" is a code which the owner of the vehicle may reveal to anyone borrowing the vehicle, so that operation of the engine may be enabled (a limited number of times) by the borrower in the event of a fault on antitheft device 3.

Block 43 goes on to block 45 which determines whether the operating code matches part "A1" of user code "A" stored in cell 46 of memory 15. In the event of a positive response, block 45 goes on to block 47; conversely, block 45 goes on to block 48. Block 47 commands reference quantity "P" in counter 40 (fig. 1) of control system 2 to assume a discrete value of, say, "5", and then goes on to block 24.

Block 48 determines whether the operating code matches user code "A". In the event of a positive response, block 48 goes on to block 51; conversely, block 48 goes on to block 52. Block 51 commands reference quantity "P" in counter 40 of control system 2 to assume a discrete value of, say, "50", and then goes on to block 24.

Block 52 determines whether the operating code matches maker code "C". In the event of a positive response, block 52 goes on to block 53; conversely, block 52 goes on to block 54. Block 53 commands reference quantity "P" in counter 40 of control system 2 to assume a discrete value of, say, "100", and then goes on to block 24. Block 54 determines whether the operating code matches fitter code "B". If it does, and code "A" has not yet been memorized, block 54 goes on to block 55; conversely, block 54 goes back to block 38. Block 55 commands reference quantity "P" in counter 40 of control system 2 to assume a discrete value of, say, "20", and then goes on to block 24.

Block 16 determines whether a quantity "Q" in cell 56 of memory 15 of control system 2 (Figure 1) presents a "0" or "1" value. If "Q" equals "1", block 16 goes on to block 57. Conversely, if "Q" equals "0", block 16 goes on to block 58 which commands a reference quantity "R" in counter 61 of control system 2 to assume a discrete value of, say, "10". Block 58 then goes on to block 62 which commands quantity "Q" in cell 56 to assume a "1" value, and provides for a character display on display 7 indicating (as described in more detail later on) startup of the engine following anomalous disconnection of control system 2, i.e. other than by withdrawal of the ignition key. Block 62 then goes on to block 63 and from there to block 24. Block 63 provides, on display 7, for a character display indicating counter 61, and for a user indication of the value of quantity "R". Block 57 determines whether reference quantity "R" presents a "0" value, and, in the event of a positive response, goes on to block 17. Conversely, block 57 goes on to block 64 which decreases the value of quantity "R" by one unit and then goes on to block 63.

In block 18, control system 2 requests two-time transmission of a code by the electric blocks connected to it. The code may be "A" or "B", in which case it is transmitted to control system 2 by device 3, or "C", in which case it is transmitted by device 6. Upon control system 2 receiving two identical codes within a predetermined time, block 18 goes on to block 71 which determines whether the code received is the fitter code "B" already memorized. In the event of a positive response, block 71 goes on to block 24. Conversely, block 71 goes on to block 72 which determines whether the code received is the maker code "C" already memorized. In the event of a positive response, block 72 goes on to block 24. Conversely, block 72 goes on to block 73 in which the received code is assumed as user code "A", and which then goes on to block 74 which provides for storing user code "A" in cell 23 and part "A1" of code "A" in cell 46. Block 74 then goes on to block 75 which determines correct or incorrect storage of user code "A" and part "A1" of code "A". In the case of correct storage, block 75 goes on to block 24; conversely, block 75 goes on to block 33.

In block 24, control system 2 activates its internal blocks preparatory to starting the vehicle engine, and also provides for a character display on display 7 indicating the engine startup enabling condition. Block 24 then goes on to block 76 which commands quantity "M" to assume a "1" value, and then goes on to engine control procedure block 77. During operation of the engine, and every predetermined number of engine cycles, block 77 goes on to block 78 which controls the position of the ignition key. If the key is withdrawn or set by the user to the off position, block 78 goes on to block 81. Conversely, if the key is set by the user to the on position, block 78 goes back to block 77 which continues controlling the engine. Block 81 commands quantity "M" to assume a "0" value, and then goes on to block 82 which in turn commands quantity "Q" to assume a "0" value and then goes on to block 83 in which control system 2 determines the most appropriate time to deactivate automatically.

Blocks 32 and 38 provide for taking the necessary steps for preventing startup of the engine, such as (Figure 1) disabling fuel pump control member 91, and disabling control of electronic fuel injection system 92 and electronic ignition system 93. Block 24 presents a procedure for determining whether the received code is code "B", in which case, a procedure for limiting output of the engine is activated in block 77; and an internal procedure for preventing startup by code "B" when quantity "P" exceeds the discrete value established in block 55.

In actual use, the owner of the vehicle is provided with transmitter 4 and informed of the series of events to be performed on the vehicle for defining the combination of events corresponding to code "A" and to part "A1" of code "A", so that the engine may be started a limited number of times by the owner in the event of a fault on device 3. If the vehicle is loaned, the owner may disclose only part "A1" of code "A" to enable the borrower, in the event of a fault on device 3, to start the engine a limited number of times, less than the number permitted using code "A". The fitter of system 1, on the other hand, is provided with transmitter 5 and informed of the series of events to be performed on the vehicle for defining the combination of events corresponding to code "B", so that the engine may be started, albeit at reduced power, by the fitter. This feature is particularly useful for vehicle manufacturers in that it enables system 1 to be installed at the end of the production line and the vehicle to be transferred to the parking lot and loaded on to the carrier for transfer to the dealer. As shown clearly in the operational flow chart of system 1, code "B" cannot be used to start the engine once code "A" has been memorized. In actual use, the maker of control system 2 defines a code "C" for each system 2, is provided with a device 6 for transmitting it to system 2, and knows the series of events to be performed on the vehicle for defining the combination of events corresponding to code "C", thus enabling the maker to produce, safely test, and carry out any maintenance or repair work on system 1.

In the event the engine is turned off, not by withdrawing the ignition key, but by interrupting the engine control procedure in block 77, system 1 permits the engine to be started up again with no code request being made. In other words, quantity "M" indicates the manner in which control system 2 is deactivated when the engine is turned off. To prevent a code being requested for initializing control system 2 when the engine is turned off abnormally, startup of the engine is permitted when quantity "M" assumes a "1" value. By means of quantity "Q" and when "M" = "1", system 1 permits the engine to be started up a limited number of times, to prevent control system 2 from being deactivated voluntarily by turning off the engine abnormally, and to prevent control system 2 from being connected to the electric supply circuit by tampering with the electric connections. Moreover, the information supplied to display 7 is memorized for providing an operating log of system 1.

The advantages of the present invention are as follows.

In particular, it provides for enabling startup of the engine by four users, each with a respective code. The owner of the vehicle is permitted to start the engine any number of times using transmitter 4, and a limited number of times by means of a combination of events representing code "A". Anyone borrowing or hiring the vehicle is permitted to start the engine a limited number of times by means of a combination of events representing part "A1" of code "A". The fitter of system 1 is permitted to start the engine a limited number of times ("P" = "20") using transmitter 5, if code "A" has not yet been memorized; to start the engine a limited number of times by means of a combination of events representing code "B", if code "A" has not yet been memorized; and also to start the engine at reduced power. If code "A" has already been memorized, the maker of control system 2 is permitted to start the engine a limited number of times by means of both device 6 and a combination of events representing code "C". Finally, the engine may also be started up a limited number of times in the event the engine is turned off abnormally. Moreover the transmission of an operating code to the control system using a series of internal events is not too complicated, because the user does not need to transmit the whole operating code, but he only needs to do a series of internal events, which are detected by control system 2 by means of a number of sensors 44 and converted internally into an operating code by conversion means.

Clearly, therefore, system 1 only permits startup of the engine by means of transmitter 4 or a startup code. And even in the event confidential code "B" or "C" should become known, these only permit startup of the engine a limited number of times, which is a strong deterrent against theft of the vehicle. Finally, all the information relative to engine turn-off, specific operating conditions of system 1, and the limited number of engine startups by means of a combination of events or following abnormal turn-off of the engine, are shown on display 7 and memorized in control system 2.

## Claims

Clearly, changes may be made to system 1 as described and illustrated herein. For example, light signals may be used for indicating turn-off of the engine and specific operating conditions of system 1.

1. A vehicle antitheft system for vehicles including an engine and an electronic engine control system (2), including:
first means for enabling or disabling startup of the engine comprising: a first block (23) in which a first code (A) is stored; a first transmitter (4) for the vehicle owner, for generating a signal representing said first code (A); a receiver (3) connected to and for supplying incoming signals to said control system (2); means (22) for comparing the signal received by said receiver (3) with said first code (A); means for enabling startup of the engine when the signal received by said receiver (3) matches said first code (A); and means for disabling startup of the engine when the signal received by said receiver (3) fails to match said first code (A);
additional to said first means, second means for enabling or disabling startup of the engine comprising: means (48) for comparing an operating code with said first code (A); means for enabling startup of the engine when said operating code matches said first code (A); means for disabling startup of the engine when said operating code fails to match said first code (A); and a number of sensors (44) for detecting a series of events effected by the user on internal parts of the vehicle;
characterised by the fact that it comprises means for converting said series of events into said operating code and means for limiting the number of times startup of the engine may be enabled by said operating code, generated from said series of events, matching said first code (A).

2. A system as claimed in Claim 1, characterised by the fact that it comprises means for displaying, on a display (7), the number of times startup of the engine may be enabled by said operating code matching said first code (A).

3. A system as claimed in at least one of the foregoing Claims, characterised by the fact that it includes additional to said first means, third means for enabling or disabling startup of the engine comprising: a second block (46) in which part (A1) of said first code (A) is stored; means (47) for comparing said operating code with said part (A1) of said first code (A); means for enabling startup of the engine when said operating code matches said part (A1) of said first code (A); means for disabling startup of the engine when said operating code fails to match said part (A1) of said first code (A); and means for limiting the number of times startup of the engine may be enabled by said operating code, produced from said series of events, matching said part (A1) of said first code (A).

4. A system as claimed in Claim 3, characterised by the fact that it comprises means for displaying, on a display (7), the number of times startup of the engine may be enabled by said operating code matching said part (A1) of said first code (A).

5. A system as claimed in at least one of the foregoing Claims, characterised by the fact that it comprises additional to said first means, fourth means for enabling or disabling startup of the engine comprising: a third block (31) in which a second code (B) is stored; a second transmitter (5) for the fitter of said system to the vehicle, for generating a signal representing said second code (B); means (28) for comparing the signal received by said receiver (3) with said second code (B); means for enabling startup of the engine a limited number of times when the signal received by said receiver (3) matches said second code (B), and providing said first code (A) has not yet been memorised in said first block (23); and means for disabling startup of the engine when the signal received by said receiver (3) fails to match said second code (B).

6. A system as claimed in Claim 5, characterised by the fact that it comprises means for low-power control of the engine, when the signal received by said receiver (3) matches said second code (B), and providing said first code (A) has not yet been memorised in said first block (23).

7. A system as claimed in Claim 5 or Claim 6, characterised by the fact that it comprises additional to said fourth means, fifth means for enabling or disabling startup of the engine comprising: means (54) for comparing said operating code with said second code (B); means for enabling startup of the engine when said operating code matches said second code (B) and said first code (A) has not yet been memorised; means for disabling startup of the engine when said operating code fails to match said second code (B); means for low-power control of the engine when said operating code matches said second code (B); and means for limiting the number of times startup of the engine may be enabled by said operating code, produced from said series of events, matching said second code (B).

8. A system as claimed in Claim 7, characterised by the fact that it comprises means for displaying on a display (7), the number of times startup of the engine may be enabled by said operating code matching said second code (B).

9. A system as claimed in at least one of the foregoing Claims, characterised by the fact that it comprises additional to said first means, sixth means for enabling or disabling startup of the engine comprising: a fourth block (26) in which a third code (C) is stored; a device (6) for the maker of said control system (2), for generating a signal representing said third code (C); means (25) for comparing the signal supplied by said device (6) with said third code (C); means for enabling startup of the engine a limited number of times when the signal supplied by said device (6) matches said third code (C); and means for disabling startup of the engine when the signal supplied by said device (6) fails to match said third code (C).

10. A system as claimed in Claim 9, characterised by the fact that it comprises additional to said sixth means, seventh means for enabling or disabling startup of the engine comprising: means (52) for comparing said operating code with said third code (C); means for enabling startup of the engine when said operating code matches said third code (C); means for disabling startup of the engine when said operating code fails to match said third code (C); and means for limiting the number of times startup of the engine may be enabled by said operating code, produced from said series of events, matching said third code (C).

11. A system as claimed in Claim 10, characterised by the fact that it comprises means for displaying, on a display (7), the number of times startup of the engine may be enabled by said operating code matching said third code (C).

12. A system as claimed in at least one of the foregoing Claims, characterised by the fact that it comprises means (78) for detecting abnormal turn-off of the engine; and means for enabling startup of the engine a limited number of times in the event the engine is turned off abnormally.

13. A system as claimed in Claim 12, characterised by the fact that it comprises means for displaying, on a display (7), the number of times startup of the engine may be enabled in the event the engine is turned off abnormally.

14. A system as claimed in the foregoing Claims, characterised by the fact that it comprises means for providing the user with information relative to engine startup enabling and disabling conditions; and means for storing all the displayed information.

## Patentansprüche

1. Kraftfahrzeug-Diebstahlsicherungssystem für Kraftfahrzeuge, die einen Motor und ein elektronisches Motorsteuersystem (2) aufweisen, umfassend:
eine erste Einrichtung zum Freigeben oder Sperren des Startens des Motors, die umfaßt: einen ersten Block (23), in dem ein erster Code (A) gespeichert ist, einen ersten Sender (4) für den Kraftfahrzeugbesitzer zum Erzeugen eines Signals, das den ersten Code (A) repräsentiert; einen Empfänger (3), der mit dem Steuersystem (2) verbunden ist und ankommende Signale diesem Steuersystem zuführt; eine Einrichtung (22) zum Vergleichen des vom Empfänger (3) empfangenen Signals mit dem ersten Code (A); eine Einrichtung zur Freigabe des Startens des Motors, wenn das vom Empfänger (3) empfangene Signal mit dem ersten Code (A) übereinstimmt; und eine Einrichtung zum Sperren des Startens des Motors, wenn das vom Empfänger (3) empfangene Signal mit dem ersten Code (A) nicht übereinstimmt;
zusätzlich zur ersten Einrichtung eine zweite Einrichtung zum Freigeben oder Sperren des Startens des Motors, die umfaßt: eine Einrichtung (48) zum Vergleichen eines Betriebscodes mit dein ersten Code (A); eine Einrichtung zum Freigeben des Startens des Motors, wenn der Betriebscode mit dem ersten Code (A) übereinstimmt; eine Einrichtung zum Sperren des Starts des Motors, wenn der Betriebscode nicht mit dem ersten Code (A) übereinstimmt; und eine Anzahl von Sensoren (44) zur Erfassung einer Reihe von Vorgängen, die vom Benutzer an internen Teilen des Kraftfahrzeuges bewirkt werden,
**dadurch gekennzeichnet, daß** es eine Einrichtung zum Wandeln dieser Reihe von Vorgängen in den Betriebscode und eine Einrichtung zur Begrenzung der Anzahl, wie oft das Starten des Motors durch den aus der Reihe von Vorgängen erzeugten Betriebscode bei Übereinstimmung mit dem ersten Code (A) freigegeben werden kann.

2. System nach Anspruch 1, **dadurch gekennzeichnet, daß** es eine Einrichtung zum Anzeigen der Anzahl auf einer Anzeige (7) umfaßt, wie oft ein Starten des Motors durch den Betriebscode bei Übereinstimmung mit dem ersten Code (A) freigegeben werden kann.

3. System nach zumindest einem der vorgenannten Ansprüche, **dadurch gekennzeichnet, daß** es zusätzlich zu der ersten Einrichtung eine dritte Einrichtung zur Freigabe oder zum Sperren des Startens des Motors aufweist, die umfaßt: einen zweiten Block (46), in dem ein Teil (A1) des ersten Codes (A) gespeichert ist; eine Einrichtung (47) zum Vergleichen des Betriebscodes mit dem Teil (A1) des ersten Codes (A); eine Einrichtung zur Freigabe des Startens des Motors, wenn der Betriebscode mit dem Teil (A1) des ersten Codes (A) übereinstimmt; eine Einrichtung zum Sperren des Startens des Motors, wenn der Betriebscode nicht mit dem Teil (A1) des ersten Codes (A) übereinstimmt, und eine Einrichtung zur Begrenzung der Anzahl, wie oft ein Starten des Motors durch den aus der Reihe von Vorgängen erzeugten Betriebscode bei Übereinstimmung mit dem Teil (A1) des ersten Codes (A) freigegeben werden kann.

4. System nach Anspruch 3, **dadurch gekennzeichnet, daß** es eine Einrichtung zur Anzeige der Anzahl auf einer Anzeige (7) umfaßt, wie oft ein Starten des Motors durch den Betriebscode bei Übereinstimmung mit dem Teil (A1) des ersten Codes (A) freigegeben werden kann.

5. System nach zumindest einem der vorgenannten Ansprüche**, dadurch gekennzeichnet, daß** es zusätzlich zur ersten Einrichtung eine vierte Einrichtung zur Freigabe oder zum Sperren des Startens des Motors aufweist, die umfaßt: einen dritten Block (31), in dem ein zweiter Code (B) gespeichert ist; einen zweiten Sender (5) für den Monteur des Systems am Fahrzeug zur Erzeugung eines Signals, das den zweiten Code (B) repräsentiert; eine Einrichtung (28) zum Vergleichen des vom Empfänger (3) empfangenen Signals mit dem zweiten Code (B); eine Einrichtung zur Freigabe des Startens des Motors für eine begrenzte Anzahl von Malen, wenn das vom Empfänger (3) empfangene Signal mit dem zweiten Code (B) übereinstimmt und unter der Voraussetzung, daß der erste Code (A) noch nicht in dem ersten Block (23) gespeichert wurde; und eine Einrichtung zum Sperren des Startens des Motors, wenn das vom Empfänger (3) empfangene Signal nicht mit dem zweiten Code (B) übereinstimmt.

6. System nach Anspruch 5, **dadurch gekennzeichnet, daß** es eine Einrichtung zur Steuerung des Motors auf niedrige Leistung umfaßt, wenn das von dem Empfänger (3) empfangene Signal mit dem zweiten Code (B) übereinstimmt und unter der Voraussetzung, daß der erste Code (A) noch nicht im ersten Block (23) eingespeichert wurde.

7. System nach Anspruch 5 oder 6, **dadurch gekennzeichnet, daß** es zusätzlich zu der vierten Einrichtung eine fünfte Einrichtung zur Freigabe oder zum Sperren des Startens des Motors aufweist, die umfaßt: eine Einrichtung (54) zum Vergleichen des Betriebscodes mit dem zweiten Code (B); eine Einrichtung zur Freigabe des Startens des Motors, wenn der Betriebscode mit dem zweiten Code (B) übereinstimmt und der erste Code (A) noch nicht eingespeichert wurde; eine Einrichtung zum Sperren des Startens des Motors, wenn der Betriebscodes mit dem zweiten Code (B) nicht übereinstimmt; eine Einrichtung zur Steuerung des Motors auf niedrige Leistung, wenn der Betriebscode mit dem zweiten Code (B) übereinstimmt; und eine Einrichtung zur Begrenzung der Anzahl, wie oft ein Starten des Motors durch den von der Reihe von Vorgängen erzeugten Betriebscode bei Übereinstimmung mit dem zweiten Code (B) freigegeben werden kann.

8. System nach Anspruch 7, **dadurch gekennzeichnet, daß** es eine Einrichtung zur Anzeige der Anzahl auf einer Anzeige (7) umfaßt, wie oft ein Starten des Motors durch den Betriebscode bei Übereinstimmung mit dem zweiten Code (B) freigegeben werden kann.

9. System nach zumindest einem der vorgenannten Ansprüche, **dadurch gekennzeichnet, daß** es zusätzlich zu der ersten Einrichtung eine sechste Einrichtung zur Freigabe oder zum Sperren des Startens des Motors aufweist, die umfaßt: einen vierten Block (26), in dem ein dritter Code (C) gespeichert ist; eine Vorrichtung (6) für den Hersteller des Steuersystems (2) zur Erzeugung eines Signals, das den dritten Code (C) repräsentiert; eine Einrichtung (25) zum Vergleichen des von der Vorrichtung (6) geliefetten Signals mit dem dritten Code (C); eine Einrichtung zur Freigabe des Startens des Motors für eine begrenzte Anzahl von Malen, wenn das von der Vorrichtung (6) gelieferte Signal mit dem dritten Code (C) übereinstimmt; und eine Einrichtung zum Sperren des Startens des Motors, wenn das von der Vorrichtung (6) gelieferte Signal nicht mit dem dritten Code (C) übereinstimmt.

10. System nach Anspruch 9, **dadurch gekennzeichnet, daß** es zusätzlich zu der sechsten Einrichtung eine siebte Einrichtung zur Freigabe oder zum Sperren des Motors aufweist, die umfaßt: eine Einrichtung (52) zum Vergleichen des Betriebscodes mit dem dritten Code (C); eine Einrichtung zur Freigabe des Startens des Motors, wenn der Betriebscode mit dem dritten Code (C) übereinstimmt; eine Einrichtung zum Sperren des Startens des Motors, wenn der Betriebscode nicht mit dem dritten Code (C) übereinstimmt, und eine Einrichtung zur Begrenzung der Anzahl, wie oft ein Starten des Motors durch den aus der Reihe von Vorgängen erzeugten Betriebscode bei Übereinstimmung mit dem dritten Code (C) freigegeben werden kann.

11. System nach Anspruch 10, **dadurch gekennzeichnet, daß** es eine Einrichtung zur Anzeige der Anzahl auf einer Anzeige (7) umfaßt, wie oft ein Starten des Motors von dein Betriebscode bei Übereinstimmung mit dem dritten Code (C) freigegeben werden kann.

12. System nach zumindest einem der vorgenannten Ansprüche, **dadurch gekennzeichnet, daß** es umfaßt: eine Einrichtung (78) zur Erfassung eines abnormalen Abstellens des Motors; und eine Einrichtung zur Freigabe des Startens des Motors für eine begrenzte Anzahl von Malen für den Fall, daß die Maschine abnormal abgestellt wurde.

13. System nach Anspruch 12, **dadurch gekennzeichnet, daß** sie eine Einrichtung zur Anzeige der Anzahl auf einer Anzeige (7) umfaßt, wie oft ein Starten des Motors im Falle eines abnormalen Abstellens des Motors freigegeben werden kann.

14. System nach einem der vorgenannten Ansprüche, **dadurch gekennzeichnet, daß** es umfaßt: eine Einrichtung zur Versorgung des Benutzers mit Informationen bezüglich der Motor-Start-Freigabe- und -Sperr-Bedingungen; und eine Einrichtung zur Speicherung der gesamten angezeigten Information.

## Revendications

1. Un système d'antivol de véhicule, pour des véhicules comprenant un moteur et un système de commande électronique de moteur (2), comprenant :
des premiers moyens pour autoriser ou interdire le démarrage du moteur comprenant : un premier bloc (23) dans lequel un premier code (A) est enregistré; un premier émetteur (4) pour le propriétaire du véhicule, destiné à générer un signal représentant le premier code (A); un récepteur (3) connecté au système de commande (2) et destiné à lui fournir des signaux entrants; des moyens (22) pour comparer le signal reçu par le récepteur (3) avec le premier code (A); des moyens pour autoriser le démarrage du moteur lorsque le signal qui est reçu par le récepteur (3) concorde avec le premier code (A); et des moyens pour interdire le démarrage du moteur lorsque le signal qui est reçu par le récepteur (3) ne concorde pas avec le premier code (A);
en plus des premiers moyens, des seconds moyens pour autoriser ou interdire le démarrage du moteur, comprenant : des moyens (48) pour comparer un code d'opérations avec le premier code (A); des moyens pour autoriser le démarrage du moteur lorsque le code d'opérations concorde avec le premier code (A); des moyens pour interdire le démarrage du moteur lorsque le code d'opérations ne concorde pas avec le premier code (A); et un certain nombre de capteurs (44) pour détecter une série d'opérations effectuées par l'utilisateur sur des organes internes du véhicule;
caractérisé par le fait qu'il comprend des moyens pour convertir la série d'opérations pour donner le code d'opérations, et des moyens pour limiter le nombre de fois que le démarrage du moteur peut être autorisé par le fait que le code d'opérations, généré, à partir de la série d'opérations, concorde avec le premier code (A).

2. Un système selon la revendication 1, caractérisé par le fait qu'il comprend des moyens pour visualiser, sur un dispositif de visualisation (7), le nombre de fois que le démarrage du moteur peut être autorisé par le fait que le code d'opérations concorde avec le premier code (A).

3. Un système selon l'une au moins des revendications précédentes, caractérisé par le fait qu'il comprend, en plus des premiers moyens, des troisièmes moyens pour autoriser ou interdire le démarrage du moteur, comprenant : un second bloc (46) dans lequel une partie (A1) du premier code (A) est enregistrée; des moyens (47) pour comparer le code d'opérations avec cette partie (A1) du premier code (A); des moyens pour autoriser le démarrage du moteur lorsque le code d'opérations concorde avec cette partie (A1) du premier code (A); des moyens pour interdire le démarrage du moteur lorsque le code d'opérations ne concorde pas avec cette partie (A1) du premier code (A); et des moyens pour limiter le nombre de fois que le démarrage du moteur peut être autorisé par le fait que le code d'opérations qui est produit à partir de la série d'opérations, concorde avec cette partie (A1) du premier code (A).

4. Un système selon la revendication 3, caractérisé par le fait qu'il comprend des moyens pour visualiser, sur un dispositif de visualisation (7), le nombre de fois que le démarrage du moteur peut être autorisé par le fait que le code d'opérations concorde avec la partie précitée (A1) du premier code (A).

5. Système selon l'une au moins des revendications précédentes, caractérisé par le fait qu'il comprend, en plus des premiers moyens, des quatrièmes moyens pour autoriser ou interdire le démarrage du moteur, comprenant : un troisième bloc (31) dans lequel un second code (B) est enregistré; un second émetteur (5) pour l'installateur du système dans le véhicule, destiné à générer un signal représentant le second code (B); des moyens (28) pour comparer le signal qui est reçu par le récepteur (3) avec le second code (B); des moyens pour autoriser le démarrage du moteur un nombre de fois limité lorsque le signal qui est reçu par le récepteur (3) concorde avec le second code (B), et à condition que le premier code (A) n'ait pas encore été mémorisé dans le premier bloc (23); et des moyens pour interdire le démarrage du moteur lorsque le signal qui est reçu par le récepteur (3) ne concorde pas avec le second code (B).

6. Un système selon la revendication 5, caractérisé par le fait qu'il comprend des moyens pour commander le fonctionnement du moteur à puissance réduite, lorsque le signal qui est reçu par le récepteur (3) concorde avec le second code (B), et à condition que le premier code (A) n'ait pas encore été mémorisé dans le premier bloc (23).

7. Un système selon la revendication 5 ou la revendication 6, caractérisé par le fait qu'il comprend, en plus des quatrièmes moyens, des cinquièmes moyens pour autoriser ou interdire le démarrage du moteur, comprenant : des moyens (54) pour comparer le code d'opérations avec le second code (B); des moyens pour autoriser le démarrage du moteur lorsque le code d'opérations concorde avec le second code (B) et le premier code (A) n'a pas encore été mémorisé; des moyens pour interdire le démarrage du moteur lorsque le code d'opérations ne concorde pas avec le second code (B); des moyens pour commander le fonctionnement du moteur à faible puissance lorsque le code d'opérations concorde avec le second code (B); et des moyens pour imiter le nombre de fois que le démarrage du moteur peut être autorisé par le fait que le code d'opérations, qui est produit à partir de la série d'opérations, concorde avec le second code (B).

8. Un système selon la revendication 7, caractérisé par le fait qu'il comprend des moyens pour visualiser, sur un dispositif de visualisation (7), le nombre de fois que le démarrage du moteur peut être autorisé par le fait que le code d'opérations concorde avec le second code (B).

9. Un système selon l'une au moins des revendications précédentes, caractérisé par le fait qu'il comprend, en plus des premiers moyens, des sixièmes moyens pour autoriser ou interdire le démarrage du moteur, comprenant : un quatrième bloc (26) dans lequel un troisième code (C) est enregistré; un dispositif (6) pour le fabricant du système de commande (2), destiné à générer un signal représentant le troisième code (C); des moyens (25) pour comparer le signal qui est fourni par ce dispositif (6) avec le troisième code (C); des moyens pour autoriser le démarrage du moteur un nombre de fois limité lorsque le signal qui est fourni par ce dispositif (6) concorde avec le troisième code (C); et des moyens pour empêcher le démarrage du moteur lorsque le signal qui est fourni par ce dispositif (6) ne concorde pas avec le troisième code (C).

10. Un système selon la revendication 9, caractérisé par le fait qu'il comprend, en plus des sixièmes moyens, des septièmes moyens pour autoriser ou interdire le démarrage du moteur, comprenant : des moyens (52) pour comparer le code d'opérations avec le troisième code (C); des moyens pour autoriser le démarrage du moteur lorsque le code d'opérations concorde avec le troisième code (C); des moyens pour interdire le démarrage du moteur lorsque le code d'opérations ne concorde pas avec le troisième code (C); et des moyens pour limiter le nombre de fois que le démarrage du moteur peut être autorisé par le fait que le code d'opérations, qui est produit à partir de la série d'opérations, concorde avec le troisième code (C).

11. Un système selon la revendication 10, caractérisé par le fait qu'il comprend des moyens pour visualiser, sur un dispositif de visualisation (7), le nombre de fois que le démarrage du moteur peut être autorisé par le fait que le code d'opérations concorde avec le troisième code (C).

12. Un système selon l'une au moins des revendications précédentes, caractérisé par le fait qu'il comprend des moyens (78) pour détecter un arrêt anormal du moteur; et des moyens pour autoriser le démarrage du moteur, un nombre de fois limité, dans le cas où le moteur est arrêté anormalement.

13. Un système selon la revendication 12, caractérisé par le fait qu'il comprend des moyens pour visualiser, sur un dispositif de visualisation (7), le nombre de fois que le démarrage du moteur peut être autorisé dans le cas où le moteur est arrêté anormalement.

14. Un système selon les revendications précédentes, caractérisé par le fait qu'il comprend des moyens pour fournir à l'utilisateur une information relative aux conditions d'autorisation et d'interdiction du démarrage du moteur, et des moyens pour enregistrer toute l'information qui est visualisée.
